# FASCICULE DE BREVET EUROPEEN

(11) **EP 0 507 684 B1**
(45) Date de publication et mention de la délivrance du brevet: **22.01.1997**
(21) Numéro de dépôt: 92400922.8
(22) Date de dépôt: 02.04.1992
(51) Int. Cl.: H04M 11/06

(54) **Système de communication applicable notamment au contrôle du trafic aérien**
Übertragungssystem, insbesondere für Luftverkehrsüberwachung
Communication system, especially for air traffic control

(30) Priorité: 03.04.1991 FR 9104023
(43) Date de publication de la demande: 07.10.1992
(73) Titulaire: THOMSON-CSF, 75008 Paris (FR)
(72) Inventeur: Berry, Georges, F-92045 Paris la Défense (FR); Woillez, Jean-Paul, F-92045 Paris la Défense (FR)
(74) Mandataire: Benoit, Monique

(56) Documents cités:
- EP-A- 0 082 333
- GB-A- 1 043 447
- IEEE GLOBAL TELECOMMUNICATIONS CONFERENCE vol. 3, no. S35, 28 Novembre 1983, SAN DIEGO (US) pages 1201 - 1206; VAMAN R. DHADESUGOOR: 'Voice and data integration using digital silence detection for satellite application'

## Description

La présente invention concerne un système de communication applicable notamment au contrôle du trafic aérien.

Dans ce type précis d'application, il est connu d'utiliser des réseaux distribués ou non, comportant une pluralité d'entrées-sorties. Typiquement, les entrées-sorties sont constituées d'une pluralité de postes opérateurs qui communiquent avec des pilotes d'avions, d'un émetteur radio permettant ces communications, de postes téléphoniques, de PABX (Private Automatical Branch exchange ou autocommutateur téléphonique privé)... cette liste n'étant pas exhaustive.

Les informations qui circulent dans le réseau sont de deux types :
- les informations à communiquer, c'est-à-dire la parole dans notre application ;
- les données ou messages de service.

Chaque type d'informations circule sur un support de transmission différent, par exemple un bus. La communication entre les opérateurs et les pilotes d'avions s'effectue alternativement, c'est-à-dire à l'alternat dans le sens opérateur-pilote, et au squelch dans le sens pilote-opérateurs. Cette communication est gérée par les messages de service qui sont donc essentiellement des messages de :
- début d'alternat lorsqu'un opérateur prend la parole ;
- fin d'alternat lorsque l'opérateur a fini de parler ;
- début l'intersignalisation d'alternat pour signaler aux autres opérateurs qu'un opérateur a pris la parole ;
- fin d'intersignalisation d'alternat ;
- début de squelch lorsqu'un pilote d'avion s'adresse aux opérateurs ;
- fin de squelch.

Le problème majeur posé par ce type de réseaux réside dans le volume important des messages de service, ce qui a pour conséquence d'augmenter le temps d'attente au niveau de l'interface radio reliant les opérateurs à l'émetteur.

Pour alléger le volume des données transmises sur le bus de données, il est connu d'utiliser les silences ou absences de parole afin de leur substituer certaines données. Tout le problème réside alors dans la séparation des deux types de messages à la réception. Il faut en effet, au niveau de l'émission, coder les données transmises à la place des silences d'une part, de façon à pouvoir les reconnaître facilement à la réception, et d'autre part, de façon à ne pas gêner la transmission de la parole.

Une solution décrite dans le document GB-A-1.043.447 consiste à remplacer les silences détectés par des données dont le code est un code interdit dans la loi de codage de la parole.

Une solution similaire à la précédente est décrite dans l'article IEEE GLOBAL TELECOMMUNICATIONS CONFERENCE (VOL. 3, n° 535 - Pages 1201 à 1206) dans lequel le système consiste à mettre un drapeau spécifique devant chaque donnée transmise à la place d'un silence, lequel drapeau correspond à un code que l'on ne rencontre pas dans les codes de la parole.

L'inconvénient majeur de ce type de solution réside dans la nécessité d'avoir deux sources de codes différentes à l'entrée pour distinguer les données de la parole.

La demande de brevet EP-A-0.082.333 décrit une autre solution dans laquelle la loi de codage choisie pour la parole est telle qu'il est impossible d'avoir, dans la transmission de la parole seule, une succession donnée de deux mots codés. Il suffit alors d'envoyer les données à la place des silences détectés par l'intermédiaire de cette succession précise de deux mots pour garantir une distinction, à la réception, entre la parole et les données. L'inconvénient de cette solution réside dans la nécessité de posséder des moyens pour générer cette succession de deux mots et y insérer les données.

La présente invention a pour but de pallier les inconvénients précédents en proposant un système dans lequel les données transmises à la place des silences détectés sont facilement identifiables.

Plus précisément, l'invention concerne un système de communication numérique tel que défini dans la revendication 1 à 7.

L'invention sera mieux comprise au vu de la description qui suit, en références aux figures suivantes :
- la figure 1 représente un réseau numérique distribué utilisé pour le contrôle de trafic aérien ;
- la figure 2 illustre une mise en oeuvre de l'invention pour une communication entre un opérateur et un pilote ;
- la figure 3 décrit un descriptif d'une interface permettant l'émission d'un signal comportant à la fois de la parole et des messages de service ;
- la figure 4 décrit un dispositif de réception d'une interface permettant de séparer les deux types d'informations à partir du signal créé à la figure 3.

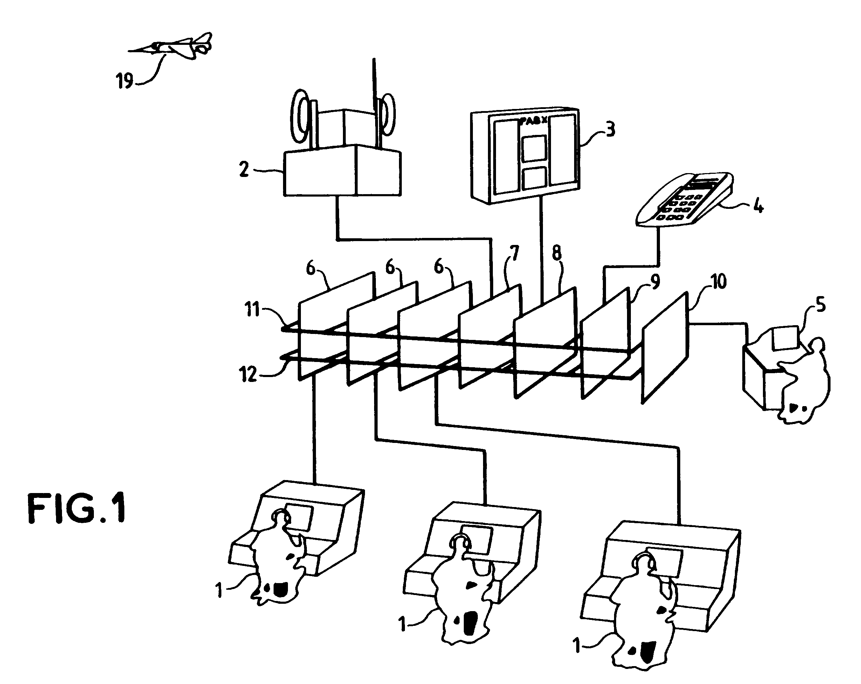

La figure 1 représente un réseau numérique de communication distribué, utilisé pour le contrôle de trafic aérien. L'architecture distribuée, c'est-à-dire, pour laquelle chaque entrée-sortie possède sa propre interface, présente l'avantage d'augmenter le transfert des informations ainsi que la sécurité dans le véhiculement de ces informations. Le réseau de la figure 1 comprend une pluralité d'entrées-sorties composées, par exemple, de trois opérateurs 1, d'un émetteur 2, d'un PABX 3, d'un poste téléphonique 4, d'une console de contrôle 5. Comme nous l'avons dit précédemment, chaque entrée-sortie 1, 2, 3, 4, 5 possède sa propre interface, respectivement 6, 7, 8, 9, 10. Les informations sont transmises sur deux bus distincts 11 et 12, le bus 11 étant le bus de transmission de la parole, et le bus 12 assurant le transport des messages de service.

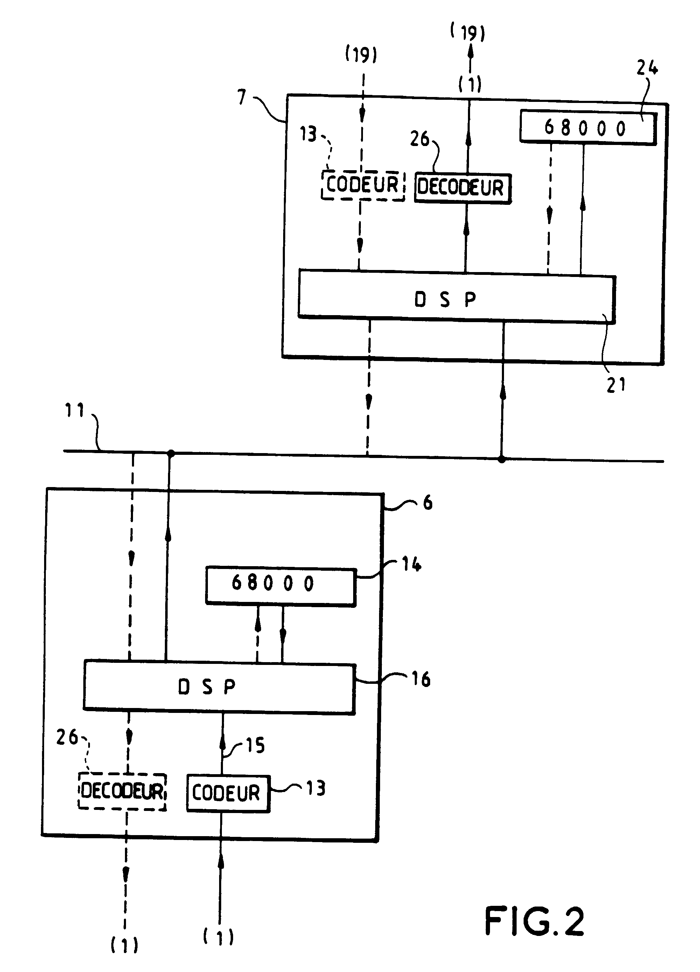

La figure 2 illustre une mise en oeuvre de l'invention pour une communication entre un opérateur 1 et un pilote d'avion 19. Les flèches représentées en traits pleins représentent la communication dans le sens opérateur-pilote. Les pointillés indiquent une communication dans le sens inverse. Dans le cas où un opérateur 1 envoie un message parlé à un pilote d'avion 19, la parole émise par l'opérateur 1 arrive au niveau de l'interface correspondante 6 sous forme analogique. Elle est échantillonnée puis codée sous forme binaire, par exemple sur un octet au moyen du dispositif 18 commandé par un microprocesseur 14, du type 68000 par exemple. Le dispositif 13 délivre en sortie un train d'impulsions 15 codées selon une loi de codage donnée dont nous donnerons les particularités ultérieurement, et contenant l'information de parole.

Afin de réduire les moyens de codage à l'émission, le système selon l'invention dispose de moyens permettant d'attribuer à chaque message de service un signe de reconnaissance constitué d'un code particulier de la loi de codage utilisée pour la parole. Pour ne pas gêner la transmission de la parole, ce code particulier est préférentiellement un code inutile pour la parole, à savoir soit inutilisé pour transmettre la parole, soit redondant pour transmettre une information donnée de parole. Une loi de codage particulièrement intéressante est la loi de codage A.

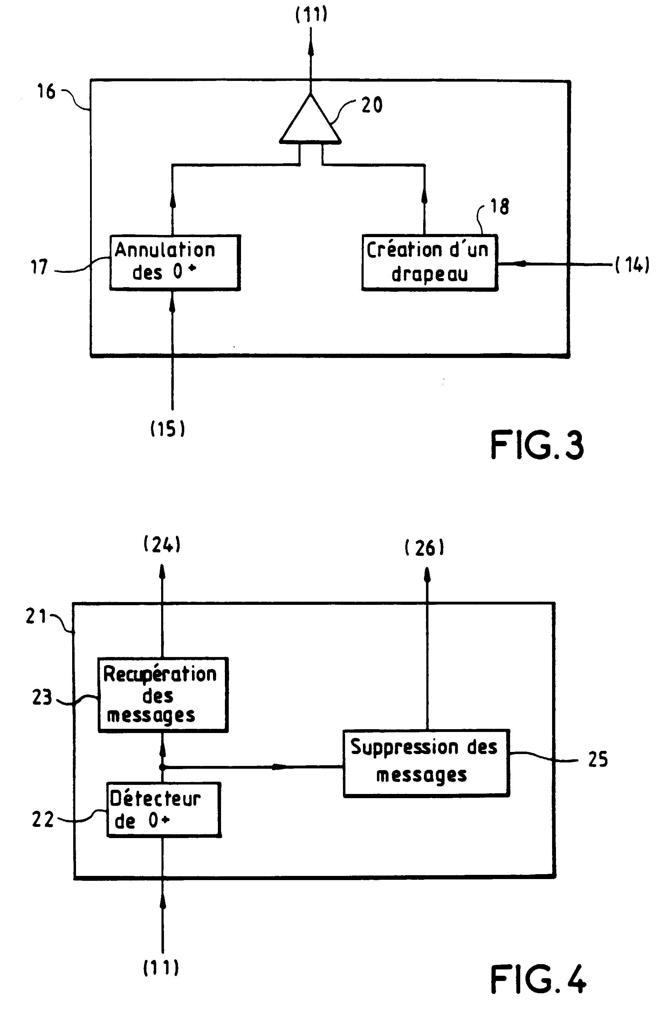

En effet, en utilisant la loi A comme loi de codage de la parole, c'est le silence, c'est-à-dire l'absence de parole, qui est représenté par deux codes 0+ et 0-. Cette redondance, qui est inutile pour la transmission de la parole seule, va être exploitée selon linvention non seulement pour transmettre sur le même support, à savoir le bus 11, la parole et certains messages de service, mais aussi pour assurer un moyen de distinction entre les deux types d'informations, sans que les messages de service ne viennent gêner la transmission de la parole. Pour ce faire, le train d'impulsions codées 15 issu du dispositif 13 va être traité par un autre dispositif 16, préférentiellement un DSP (Digital Signal Processor ou processeur de signal numérique) pour sa rapidité d'exécution. Le traitement effectué sur le train d'impulsions codées 15 par le dispositif 16 est le suivant, en référence à la figure 3 : selon un mode de réalisation possible de l'invention, le dispositif 16 d'émission d'un signal comportant à la fois de la parole et des messages de service, comporte des premiers moyens 17 qui assurent la détection , dans le train d'impulsions 15, d'un des codes redondants, par exemple le 0+, ainsi que la suppression systématique de ce code.

Parallèlement, le dispositif 16 reçoit de la part du microprocesseur 14 des messages de service codés sur un octet, par exemple un message de début d'alternat et d'intersignalisation de début d'alternat. Les codes utilisés pour le codage de ces messages de service sont choisis préférentiellement parmi les codes représentatifs des signaux de parole les plus faibles en intensité de la loi de codage utilisée pour la parole, ceci afin de ne pas gêner la réception de la parole au cas où il y a émission d'un message de service en même temps que la parole. Cette distinction est créée au niveau du dispositif 16 à l'aide de seconds moyens 18 qui placent un drapeau, c'est-à-dire un signe de reconnaissance, par exemple au début de chaque message de service. Avantageusement, ce signal de reconnaissance est constitué du code qui a été supprimé de la parole, à savoir le code 0+. Les signaux issus d'une part, des premiers moyens 17 et d'autre part, des moyens 18, sont alors multiplexés par un dispositif de multiplexage standard 20 avant d'être transférés sur le bus de parole 11.

L'interface radio 7 de la figure 2 reçoit donc un signal multiplexé qui contient à la fois de la parole et des messages de service. Ce signal est traité par un dispositif 21 de préférence un DSP, qui va assurer la séparation des deux types d'informations comme il suit : sur la figure 4, le dispositif 21 de réception du signal multiplexé comporte des premiers moyens 22 de détection du 0+. S'il y a détection de 0+, des seconds moyens 23 se chargent d'isoler et de sauvegarder le message de service contenu dans l'octet qui suit le 0+.

Le message de service récupéré est alors envoyé au microprocesseur 24 de l'interface radio 7 (voir figure 2). Parallèlement, des troisièmes moyens 25 assurent la suppression des messages de service afin de ne conserver que les informations relatives à la parole. Ces informations sont ensuite envoyées à un dispositif de décodage 26 (voir figure 2) afin de récupérer la parole sous forme analogique et de la transmettre au pilote 19 via l'émetteur 2 de la figure 1.

Pour plus de clarté, le fonctionnement du système selon l'invention a été décrit dans le cadre d'une simple communication entre un opérateur 1 et un pilote d'avion 19. Il est clair que l'intérêt de ce système réside dans le fait qu'il existe plusieurs opérateurs 1, donc plusieurs interfaces 6 qui assurent le transfert de signaux comportant deux types d'informations vers le bus de parole 11 selon le fonctionnement illustré sur la figure 3.

De même, seule la communication dans le sens opérateur-pilote (alternat) a été décrite. L'extension à la communication dans le sens pilote-opérateur se fait simplement en permutant les fonctionnements des DSP 16 et 21 tels que décrits précédemment, et en utilisant la partie représentée en pointillés sur la figure 2.

Il est particulièrement avantageux d'utiliser, pour une même interface, un unique DSP permettant, suivant le sens de la communication, d'émettre un signal comportant à la fois de la parole et des messages de service, ou de séparer les deux types d'informations contenus dans un tel signal reçu.

En outre, le choix de la loi de codage ne se limite absolument pas à la loi A. En effet, cette loi est pratique en ce sens qu'elle introduit une redondance exploitable et particulièrement intéressante en ce sens qu'elle est relative aux silences qu'il faut détecter. Cependant, il n'est absolument pas exclu de choisir une autre loi de codage présentant une autre redondance, ou encore, pour toute loi de codage utilisée, un code qui ne soit pas trop gênant dans la transmission.

L'invention telle qu'elle a été exposée ne se limite pas aux communications radio entre opérateurs et pilotes d'avions et peut s'étendre à tout type de réseaux de communications numériques utilisant plusieurs canaux de transmission.

De même, l'architecture distribuée du réseau ne constitue pas une condition nécessaire à la mise en oeuvre du système selon l'invention.

## Revendications

1. Système de communication numérique entre une pluralité d'entrées-sorties reliées entre elles par un premier support (11) de transmission de la parole, transmise sous forme d'impulsions codées (15) selon une loi de codage donnée, ledit système étant du type dans lequel on détecte les codes relatifs aux silences sur le premier support de transmission (11) pour y véhiculer à la place des messages de service, et comportant un dispositif d'émission (16) comprenant des moyens (18) qui placent un signe de reconnaissance constitué d'un code donné de ladite loi de codage au niveau de chaque message de service, le système étant caractérisé en ce qu'il comporte en outre un dispositif de réception (21) comprenant des moyens (22, 23, 25) pour reconnaître et séparer lesdits messages de service transmis de la parole transmise, et en ce que ledit code donné de la loi de codage constituant le signe de reconnaissance est un code redondant de la loi de codage.

2. Système de communication numérique selon la revendication 1, caractérisé en ce que le dispositif d'émission (16) comporte en outre des moyens (17) de détection et de suppression des codes relatifs aux silences, et un dispositif de multiplexage (20) des signaux issus d'une part des moyens de détection (17) et d'autre part, des moyens (18) plaçant ledit signe de reconnaissance.

3. Système de communication numérique selon l'une quelconque des revendications 1 et 2, caractérisé en ce que lesdits moyens (22, 23, 25) du dispositif de réception (21) sont constitués par:
- des premiers moyens (22) de détection dudit code constituant le signe de reconnaissance ;
- des seconds moyens (23) qui isolent et sauvegardent alors le message de service reconnu ;
- des troisièmes moyens (25) qui suppriment ledit message de service au niveau de la parole transmise.

4. Système de communication numérique selon l'une quelconque des revendications précédentes, caractérisé en ce que ledit signe de reconnaissance est placé au début du message de service transmis.

5. Système de communication numérique selon l'une quelconque des revendications précédentes, caractérisé en ce que ladite loi de codage est la loi A pour laquelle le code redondant est le code 0+ ou 0- représentant les silences.

6. Système de communication numérique selon l'une quelconque des revendications précédentes, caractérisé en ce que les messages de service transmis sont codés par les codes représentatifs des signaux de parole les plus faibles dans la loi de codage donnée.

7. Système de communication numérique selon l'une quelconque des revendications précédentes, caractérisé en ce que les dispositifs d'émission (16) et/ou de réception (21) sont des DSP.

## Patentansprüche

1. System zur digitalen Kommunikation zwischen mehreren Eingängen/Ausgängen, die miteinander über einen ersten Träger (11) zur Übertragung von Sprache verbunden sind, die in der Form von Impulsen (15) übertragen wird, die entsprechend einem gegebenen Codierungsgesetz codiert werden, wobei das System von dem Typ ist, bei dem die sich auf Gesprächspausen beziehenden Codes auf dem ersten Übertragungsträger (11) erfaßt werden, um dort statt dessen Dienstnachrichten zu transportieren, und eine Sendevorrichtung (16) enthält, die Mittel (18) aufweist, die im Bereich jeder Dienstnachricht ein Erkennungszeichen anordnen, das aus einem gegebenen Code des Codierungsgesetzes besteht, wobei das System dadurch gekennzeichnet ist, daß es außerdem eine Empfangsvorrichtung (21) aufweist, die mit Mitteln (22, 23, 25) versehen ist, um die übertragenen Dienstnachrichten aus dem übertragenen Gespräch zu erkennen und von diesem zu trennen, und daß der gegebene, das Erkennungszeichen bildende Code des Codierungsgesetzes ein redundanter Code des Codierungsgesetzes ist.

2. System zur digitalen Kommunikation nach Anspruch 1, dadurch gekennzeichnet, daß die Sendevorrichtung (16) außerdem Mittel (17) zur Erfassung und zur Unterdrückung von sich auf Gesprächspausen beziehenden Codes sowie eine Vorrichtung (20) zum Multiplexieren der Signale aufweist, die zum einen von den Erfassungsmitteln (17) und zum anderen von den Mitteln (18) abgegeben werden, die das Erkennungszeichen anordnen.

3. System zur digitalen Kommunikation nach einem der Ansprüche 1 und 2, dadurch gekennzeichnet, daß die Mittel (22, 23, 25) der Empfangsvorrichtung (21) bestehen aus:
- ersten Mitteln (22) zur Erfassung des Codes, der das Erkennungszeichen bildet;
- zweiten Mitteln (23), die dann die erkannte Dienstnachricht isolieren und schützen;
- dritten Mitteln (25), welche die Dienstnachricht im Bereich des übertragenen Gesprächs unterdrücken.

4. System zur digitalen Kommunikation nach einem der vorhergehenden Ansprüche, dadurch gekennzeichnet, daß das Erkennungszeichen am Beginn der übertragenen Dienstnachricht angeordnet wird.

5. System zur digitalen Kommunikation nach einem der vorhergehenden Ansprüche, dadurch gekennzeichnet, daß das Codierungsgesetz das Gesetz A ist, bei dem der redundante Code der Code 0+ oder 0- ist, der die Gesprächspausen darstellt.

6. System zur digitalen Kommunikation nach einem der vorhergehenden Ansprüche, dadurch gekennzeichnet, daß die übertragenen Dienstnachrichten durch die Codes codiert werden, die bei dem gegebenen Codierungsgesetz die schwächsten Gesprächssignale darstellen.

7. System zur digitalen Kommunikation nach einem der vorhergehenden Ansprüche, dadurch gekennzeichnet, daß die Sendevorrichtung (16) und/oder die Empfangsvorrichtung (21) DSPs (Digital Signal Processors) sind.

## Claims

1. System for digital communications between a plurality of inputs/outputs linked together by a first medium (11) for speech transmission, transmitted in the form of coded pulses (15) according to a given coding law, the said system being of the type in which the codes relating to silences on the first transmission medium (11) are detected in order to transport service messages thereon instead and including a transmission device (16) comprising means (18) which place a recognition sign consisting of a given code of the said coding law within each service message, the system being characterized in that it further includes a receiving device (21) comprising means (22, 23, 25) for recognizing and separating the said service messages transmitted from the speech transmitted, and in that the said given code of the coding law constituting the recognition sign is a redundant code of the coding law.

2. Digital communications system according to Claim 1, characterized in that the transmission device (16) further includes means (17) for detecting and deleting codes relating to the silences, and a device (20) for multiplexing signals output, on the one hand, by the detection means (17) and on the other hand, by the means (18) inserting the said recognition sign.

3. Digital communications system according to either of Claims 1 and 2, characterized in that the said means (22, 23, 25) of the receiving device (21) consist of:
- first means (22) for detecting the said code constituting the recognition sign;
- second means (23) which isolate and then save the service message recognized;
- third means (25) which delete the said service message from within the transmitted speech.

4. Digital communications system according to any one of the preceding claims, characterized in that the said recognition sign is placed at the start of the transmitted service message.

5. Digital communications system according to any one of the preceding claims, characterized in that the said coding law is the A law for which the redundant code is the 0+ or 0- code representing silences.

6. Digital communications system according to any one of the preceding claims, characterized in that the transmitted service messages are coded by codes representing the weakest speech signals in the given coding law.

7. Digital communications system according to any one of the preceding claims, characterized in that the transmitting (16) and/or receiving (21) devices are DSPs.
